# EUROPÄISCHE PATENTSCHRIFT

(11) **EP 2 036 138 B1**
(45) Veröffentlichungstag und Bekanntmachung des Hinweises auf die Patenterteilung: **02.02.2011**
(21) Anmeldenummer: 07728079.0
(22) Anmeldetag: 13.04.2007
(51) Int. Cl.: H01L 41/04

(54) **Einrichtung mit Piezoaktor**
Device comprising piezo actuator
Dispositif comprenant actionneur piézoélectrique

(30) Priorität: 05.07.2006 DE 102006031079
(43) Veröffentlichungstag der Anmeldung: 18.03.2009
(73) Patentinhaber: SIEMENS AKTIENGESELLSCHAFT, 80333 München (DE)
(72) Erfinder: LADRA, Uwe, 91056 Erlangen (DE); SCHÄFERS, Elmar, 90763 Fürth (DE); STOIBER, Dietmar, 90763 Fürth (DE); WEDEL, Bernd, 91096 Möhrendorf (DE)
(86) Internationale Anmeldenummer: PCT/EP2007/053612
(87) Internationale Veröffentlichungsnummer: WO 2008/003531

(56) Entgegenhaltungen:
- EP-A1- 0 381 155
- DE-A1- 19 810 321
- US-A1- 2004 007 941

## Beschreibung

Die Erfindung betrifft eine Einrichtung, wobei die Einrichtung einen Piezoaktor umfasst. Ferner betrifft die Erfindung eine Werkzeugmaschine, die eine solche Einrichtung aufweist.

Piezoaktoren sind vielseitig verwendbar und es gibt sie daher in verschiedenen Formen wie z.B. Stapelaktoren, Disk Translators, Bender- oder Tube-Aktoren. Ein Anwendungsgebiet von Piezoaktoren neben anderen ist die gesteuerte oder geregelte Schwingungsdämpfung in Werkzeugmaschinen.

Piezoaktoren werden mittels Leistungsverstärkern angesteuert, die die erforderlichen Ansteuerspannungen bereitstellen. Dabei richtet sich die Höhe der Ansteuerspannung nach dem Typ des Piezoaktors. So gibt es Niedervoltaktoren, die Ansteuerspannungen bis 100 Volt oder 200 Volt und Hochvoltaktoren, die Ansteuerspannungen bis 600 Volt, 1000 Volt oder 2000 Volt liefern.

Die Leistungsverstärker sind dabei an den jeweiligen Piezoaktor angepasst. Einheitliche Standards existieren nicht, sodass im Fall einer NC-gesteuerten Werkzeugmaschine neben der NC-Steuerung mit Leitungsverstärkern für die Servomotoren weitere Leistungsverstärker für die Piezoaktoren erforderlich sind. Die Verwendung zusätzlicher Elektronikbaugruppen hat jedoch viele Nachteile: Zwischen der NC-Steuerung, die die Servomotoren ansteuert und den Piezoaktoren ist keine direkte Koordination möglich. Rationalisierungsvorteile durch hohe Lösgrößen lassen sich nicht realisieren. Service und Ersatzteilbewirtschaftung sind nicht einheitlich. Die Inbetriebnahme und Optimierungsstrategie zwischen den Servomotoren und den Piezoaktoren ist unterschiedlich. Dies verdoppelt den Personalbedarf.

Somit existiert keine einheitliche Soft- und Hardware für Servoantriebe und Piezoaktoren. Die Piezoaktoren kommunizieren nicht über den Bus der NC-Steuerung, sondern es wird zur Steuerung und Regelung der Piezoaktorik eine hiervon abweichende und hierzu inkompatible Hardware eingesetzt, die einer weiteren Verwendung von Piezoaktoren in Werkzeugmaschinen entgegensteht.

Aus der Entgegenhaltung DE 198 10 321 A1 ist ein Verfahren und eine Schaltungsanordnung zur Strom- und Ladungsregelung von kapzitiven Lasten und deren Verwendung bekannt. Dabei wird ein Piezoaktor von einer Stromquelle gespeist.

Aus der Entgegenhaltung US 2004/007941 A1 ist ein Piezoaktor, der mit einer Induktivität und einem Widerstand in Reihe geschaltet ist, bekannt.

Aus der EP 0 381 155 A1 ist eine Werkzeugmaschine, die Servomotoren und einen Piezoaktor aufweist, bekannt.

Eine Aufgabe der vorliegenden Erfindung ist es, bekannte Piezoaktoren mittels bekannter NC-Steuerungen ansteuern zu können.

Die Aufgabe wird gelöst durch eine Einrichtung, wobei die Einrichtung einen Piezoaktor umfasst, wobei die Einrichtung ein Anpasselement und einen dreiphasigen Umrichter umfasst, wobei der Piezoaktor über ein Anpassungselement mit einer ersten Phase des dreiphasigen Umrichters verbunden ist, wobei der Piezoaktor mit einer zweiten Phase des dreiphasigen Umrichters verbunden ist, wobei der Umrichter zur Ansteuerung induktiver Lasten ausgebildet ist, wobei das Anpasselement zur Impedanzanpassung des Piezoaktors an den Umrichter ausgebildet ist. Durch das Anpassungselement wird es möglich, Steuerungen bzw. Umrichter von NC-Systemen zu verwenden, die normalerweise zur Ansteuerung von Servomotoren verwendet werden. Damit entfällt die Notwenigkeit, für die Ansteuerung von Piezoaktoren speziell ausgebildete Hardware bereitzustellen, sondern es können die oben genannten bekannten Steuerungen bzw. Umrichter verwendet werden. Außerdem können die Piezoaktoren durch das Anpassungselement in den Bus der NC-Steuerung eingebunden werden. Dies erlaubt eine Kommunikation in Echtzeit über den NC-Bus.

Vorteilhafte Ausgestaltungen der Erfindung sind in den Unteransprüchen angegeben.

Vorzugsweise weist das Anpassungselement im Wesentlichen eine Tiefpasscharakteristik auf. Es kann sich dabei um die Tiefpasscharakteristik eines Tiefpasses 1., 2. oder höherer Ordnung handeln, wobei der Tiefpass derart dimensioniert ist, dass im wesentlichen nur Anteile unterhalb der Pulsfrequenz des Umrichters an den Piezoaktor weitergeleitet werden. So wird mit dem Anpassungselement eine Impedanzanpassung erreicht, derart, dass Steuerungen, wie z.B. Umrichter zur Ansteuerung von Servomotoren, verwendet werden können, um den Piezoaktor anzusteuern. Dabei können Steuerungen bzw. Umrichter verwendet werden, die ein pulsweitenmoduliertes Ausgangsignal liefern und die in NC-gesteuerten Werkzeugmaschinen häufig Verwendung finden.

Das Anpassungselement kann aktive und/oder passive Bauelemente, wie z.B. Operationsverstärker aufweisen. Bevorzugt ist das Anpassungselement jedoch aus passiven Bauelementen gebildet , so dass das Anpassungselement einen einfachen Aufbau aufweist und gleichzeitig eine zuverlässige Funktion gewährleistet ist. Dabei kann der Piezoaktor mit dem Anpassungselement einstückig ausgebildet sein, oder es handelt sich alternativ um zwei voneinander getrennte Bauelemente.

In einer bevorzugten Ausführungsform weist das Anpassungselement wenigstens eine Induktivität auf. Die Induktivität ist dabei derart dimensioniert, dass das kapazitive Verhalten des Piezoaktors durch die Induktivität kompensiert wird, so dass z.B. Umrichter zur Ansteuerung von Servomotoren zur Ansteuerung des Piezoaktors verwendet werden können, die zur Ansteuerung induktiver Lasten ausgebildet sind. Ferner bewirkt die Induktivität eine Stromglättung bei Verwendung pulsweitenmodulierter Signale.

Ferner weist das Anpassungselement vorzugsweise wenigstens einen ohmschen Widerstand auf. Der ohmsche Widerstand ist dabei derart dimensioniert, dass Oberwellen von Spannungsimpulsen gedämpft und im Wesentlichen nur Anteile unterhalb der Pulsfrequenz einer Steuerung bzw. eines Umrichters an den Piezoaktor weitergeleitet werden. Damit weist das Anpassungselement eine Tiefpasscharakteristik eines Tiefpasses 2. Ordnung auf.

Neben der Induktivität und dem ohmschen Widerstand kann das Anpassungselement weitere Bauelemente aufweisen. Ferner können bei entsprechender Dimensionierung die Induktivität und der ohmsche Widerstand parallel zueinander angeordnet sein. Vorzugsweise sind die wenigstens eine Induktivität und der wenigstens eine ohmsche Widerstand aber in Reihenschaltung angeordnet .

Ferner sind der Piezoaktor und das Anpassungselement vorzugsweise in Reihenschaltung angeordnet . Dabei sind sowohl der Piezoaktor als auch das Anpassungselement mit einer Steuerung verbunden.

Das Anpassungselement kann dazu dienen, einen Piezoaktor mit einer einphasigen Steuerung anzusteuern, die zur Steuerung induktiver Lasten ausgebildet ist. Erfindungsgemäβ ist aber das Anpassungselement mit einer ersten Phase eines dreiphasigen Umrichters verbunden ist und der Piezoaktor mit einer zweiten Phase des dreiphasigen Umrichters verbunden , so dass dreiphasige Steuerungen bzw. Umrichter verwendet werden können, mit denen Servomotoren, z.B. in NC-gesteuerten Werkzeugmaschinen angesteuert werden. Dabei wird der Kommutierungswinkel der ungenutzten Phase eingefroren.

Ferner ist vorzugsweise vorgesehen, dass der Piezoaktor ein Messelement aufweist. Dabei kann es sich um einen Dehnungsmessstreifen (DMS) handeln, mit dem die Auslenkung des Piezoaktors erfasst werden kann. Dies erlaubt sowohl einen gesteuerten Betrieb (open loop) als auch einen geregelten Betrieb (closed loop). Dabei wird das Messsignal in ein Sinus-Cosinus-Inkrementalsignal umgewandelt. In dieser Form kann das Signal einem Regler zugeführt werden, der zu einer Steuerung bzw. einem Umrichter gehört, mit dem normalerweise Servomotoren angesteuert werden.

Ferner gehört zur Erfindung eine Werkzeugmaschine, die wenigstens einen erfindungsgemäßen Piezoaktor aufweist. Dabei weist die Werkzeugmaschine eine Steuerung bzw. Umrichter auf, mit der ein z.B. dreiphasiger Servomotor angesteuert wird, wobei der Umrichter zusätzlich einen Regler zur Lageregelung aufweisen kann. Softwaremäßig kann dabei der Umrichter derart eingerichtet sein, dass nur zwei von den drei Phasen verwendet werden, wenn an dem Umrichter statt eines dreiphasigen Servomotors ein Piezoakator mit einem Anpassungselement angeschlossen ist.

Die Erfindung wird nachfolgend anhand eines Ausführungsbeispiels beschrieben, das mit Hilfe von Zeichnungen näher erläutert wird. Hierbei zeigen:

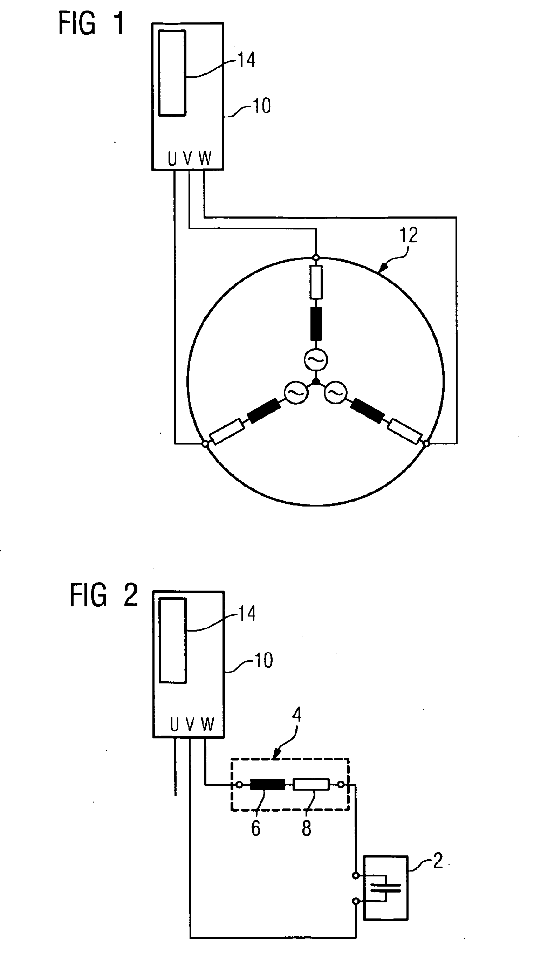

- FIG 1: eine schematische Darstellung eines aus dem Stand der Technik bekannten Umrichters zur Ansteuerung eines Servomotors, und
- FIG 2: eine schematische Darstellung eines erfindungsgemä- ßen Piezoaktors mit einem Anpassungselement.

Dargestellt ist ein Umrichter 10, der üblicherweise zur Ansteuerung eines dreiphasigen Motors, wie z.B. eines Servomotors 12 verwendet wird und daher an seinen drei Ausgangsanschlüssen einen dreiphasigen Strom liefert. Dabei weist der Umrichter 10 einen Regler 14 auf, der durch Vergleich von vorgegebenen Solldaten und gemessenen Istdaten eine Stellgröße bestimmt, derart, dass die Istdaten sich den Solldaten annähern, bis sie diesen entsprechen. Dabei werden die Istdaten durch nicht dargestellte Messmittel erfasst und durch nicht dargestellte Leitungen dem Regler 14 zugeführt.

Der Umrichter 10 weist Leistungsverstärker (nicht dargestellt) auf, deren maximale Ausgangspannung zwischen 150 Volt bis 750 Volt liegt. Um hohe Verlustleistungen beim Stellen von gewünschten Ausgangspannungen zu vermeiden, sind die Leistungsverstärker für Servoantriebe mit getakteten bzw. gepulsten Endstufen versehen. Eine gewünschte Ausgangsspannung wird durch ein entsprechendes Taktverhältnis, also mittels Pulsweitenmodulation, bereitgestellt.

Ein dreiphasiger Drehstrommotor 12 kann mittels eines elektrischen Ersatzschaltbildes als eine Reihenschaltung aus einem ohmschen Widerstand und einer Induktivität aufgefasst werden, sodass der Drehstrommotor 12 eine induktive Last für den Umrichter 10 darstellt.

Ein Piezoaktor 2 hingegen, dessen Arbeitspannung je nach Typ zwischen 100 Volt bis 1000 Volt liegt, kann mittels eines elektrischen Ersatzschaltbildes als Kapazität aufgefasst werden, sodass ein Piezoaktor 2 eine kapazitive Last darstellt. Deshalb ist zwischen einer der drei Phasen des Umrichters 10 und dem Piezoaktor 2 in Reihenschaltung ein Anpassungselement 4 vorgesehen, das aus einer Induktivität 6 und einem ohmschen Widerstand 8 gebildet ist. Dabei bildet die Induktivität 6 zusammen mit dem ohmschen Widerstand 8 einen Filter mit Tiefpasswirkung, der eine Glättung der pulsweitenmodulierten Ausgangsspannung des Umrichters 10 bewirkt und insbesondere die fließende Stromhöhe begrenzt, der sonst allein durch das kapazitive Verhalten des Piezoaktors 2 begrenzt werden würde, sodass Stromgrößen vermieden werden, die sonst eine Zerstörung von Bauelementen zur Folge haben könnten.

Wird z.B. ein Piezoaktor mit einer Betriebsspannung von 600 Volt verwendet und soll die Eckfrequenz des Filters 1,8 kHz (aperiodische Dämpfung, keine Überhöhung) betragen, wobei die Rechteckfrequenz des Umrichters 10 16 kHz beträgt, so werden für die Induktivität 1,5 mH und für den ohmschen Widerstand 15 Ohm gewählt. Die Wärmeverlustleistung beträgt dann ca. 100 Watt, während die Dämpfung bei 16 kHz (Frequenz der Ausgangsspannung bei 8 kHz Pulsfrequenz) - 40 dB beträgt, was einem Faktor von 100 entspricht. Dabei können die Nutzfrequenzen für den Piezoaktor bis zu Frequenzen von 1 kHz ohne Amplitudenminderung übertragen werden.

Dabei ist der Umrichter 10 derart eingerichtet, dass der Kommutierungswinkel der unbenutzter Phase eingefroren und somit diese Phase nicht benutzt wird. Ferner ist der Umrichter 10, z.B. softwaretechnisch, derart eingerichtet, dass eine Regelung der Ausgangsspannung erfolgt, während eine Stromregelung deaktiviert ist.

Zur Lageregelung weist der Piezoaktor 2 einen Dehnungsmessstreifen (nicht dargestellt) auf. Er liefert ein Analogsignal als Ausgangssignal. Mit Hilfe eines z.B. elektronischen Signalumsetzers wird das analoge Ausgangssignal in ein Sinus-Kosinus-Inkrementalsignal umgewandelt, dass dann dem Regler 14 zugeführt wird, sodass ein herkömmlicher Regler 14 eines NC-Unrichters 10 zur Ansteuerung induktiver Lasten wie Servomotoren verwendet werden kann. Erfolgt jedoch keine Lageregelung, ist ein derartiger elektronischer Signalumsetzer nicht erforderlich.

## Patentansprüche

1. Einrichtung, wobei die Einrichtung einen Piezoaktor (2) umfasst, **dadurch gekennzeichnet, dass** die Einrichtung ein Anpasselement (4) und einen dreiphasigen Umrichter (10) umfasst, wobei der Piezoaktor (2) über ein Anpassungselement (4) mit einer ersten Phase des dreiphasigen Umrichters (10) verbunden ist, wobei der Piezoaktor (2) mit einer zweiten Phase des dreiphasigen Umrichters (10) verbunden ist, wobei der Umrichter (10) zur Ansteuerung induktiver Lasten ausgebildet ist, wobei das Anpasselement (4) zur Impedanzanpassung des Piezoaktors (2) an den Umrichter (10) ausgebildet ist.

2. Einrichtung nach Anspruch 1,
**dadurch gekennzeichnet, dass** das Anpassungselement (4) im Wesentlichen eine Tiefpasscharakteristik aufweist.

3. Einrichtung nach Anspruch 1 oder 2,
**dadurch gekennzeichnet, dass** das Anpassungselement (4) aus passiven Bauelementen gebildet ist.

4. Einrichtung nach Anspruch 2 oder 3,
**dadurch gekennzeichnet, dass** das Anpassungselement (4) wenigstens eine Induktivität (6) aufweist.

5. Einrichtung nach Anspruch 4,
**dadurch gekennzeichnet, dass** das Anpassungselement (4) wenigstens einen ohmschen Widerstand (8) aufweist.

6. Einrichtung nach Anspruch 5,
**dadurch gekennzeichnet, dass** die wenigstens eine Induktivität (6) und der wenigstens eine ohmsche Widerstand (8) in Reihenschaltung angeordnet sind.

7. Einrichtung nach Anspruch 6,
**dadurch gekennzeichnet, dass** der Piezoaktor (2) und das Anpassungselement (4) in Reihenschaltung angeordnet sind.

8. Werkzeugmaschine, wobei die Werkzeugmaschine eine Einrichtung nach einem der vorhergehenden Ansprüche aufweist.

## Claims

1. Device, the device comprising a piezoelectric actuator (2), **characterized in that** the device comprises an adaptation element (4) and a three-phase converter (10), the piezoelectric actuator (2) being connected to a first phase of the three-phase converter (10) via an adaptation element (4), the piezoelectric actuator (2) being connected to a second phase of the three-phase converter (10), the converter (10) being designed for driving inductive loads, and the adaptation element (4) being designed for impedance matching of the piezoelectric actuator (2) to the converter (10).

2. Device according to Claim 1, **characterized in that** the adaptation element (4) essentially has a low-pass characteristic.

3. Device according to Claim 1 or 2, **characterized in that** the adaptation element (4) is formed by passive components.

4. Device according to Claim 2 or 3, **characterized in that** the adaptation element (4) has at least one inductance (6).

5. Device according to Claim 4, **characterized in that** the adaptation element (4) has at least one ohmic resistance (8).

6. Device according to Claim 5, **characterized in that** the at least one inductance (6) and the at least one ohmic resistance (8) are arranged in a series circuit.

7. Device according to Claim 6, **characterized in that** the piezoelectric actuator (2) and the adaptation element (4) are arranged in a series circuit.

8. Machine tool, the machine tool having a device according to one of the preceding claims.

## Revendications

1. Dispositif, le dispositif comprenant un actionneur ( 2 ) piézoélectrique, **caractérisé en ce que** le dispositif comprend un élément ( 4 ) d'adaptation et un convertisseur ( 10 ) triphasé, l'actionneur ( 2 ) piézoélectrique étant relié à une première phase du convertisseur ( 10 ) triphasé par un élément ( 4 ) d'adaptation, l'actionneur ( 2 ) piézoélectrique étant relié à une deuxième phase du convertisseur ( 10 ) triphasé, le convertisseur ( 10 ) étant constitué pour commander des charges inductives, l'élément ( 4 ) d'adaptation étant constitué pour l'adaptation de l'impédance de l'actionneur ( 2 ) piézoélectrique au convertisseur ( 10 ).

2. Dispositif suivant la revendication 1,
**caractérisé en ce que** l'élément ( 4 ) d'adaptation a essentiellement une caractéristique de passe-bas.

3. Dispositif suivant la revendication 1 ou 2,
**caractérisé en ce que** l'élément ( 4 ) d'adaptation est formé de composants passifs.

4. Dispositif suivant la revendication 2 ou 3,
**caractérisé en ce que** l'élément ( 4 ) d'adaptation comporte au moins une inductance ( 6 ).

5. Dispositif suivant la revendication 4,
**caractérisé en ce que** l'élément ( 4 ) d'adaptation comporte au moins une résistance ( 8 ) ohmique.

6. Dispositif suivant la revendication 5,
**caractérisé en ce que** la au moins une inductance ( 6 ) et la au moins une résistance ( 8 ) ohmique sont montées dans un circuit série.

7. Dispositif suivant la revendication 6,
**caractérisé en ce que** l'actionneur ( 2 ) piézoélectrique et l'élément ( 4 ) d'adaptation sont montés dans un circuit série.

8. Machine-outil, la machine-outil ayant un dispositif suivant l'une des revendications précédentes.
